# EUROPÄISCHE PATENTSCHRIFT

(11) **EP 1 093 972 B1**
(45) Veröffentlichungstag und Bekanntmachung des Hinweises auf die Patenterteilung: **03.11.2004**
(21) Anmeldenummer: 00121411.3
(22) Anmeldetag: 29.09.2000
(51) Int. Cl.: B60R 11/02, H04M 1/06, H04M 1/04

(54) **Halterung für Funktelefon**
Holder for a radiotelephone
Support pour un radiotéléphone

(30) Priorität: 21.10.1999 DE 19950929
(43) Veröffentlichungstag der Anmeldung: 25.04.2001
(73) Patentinhaber: Peiker, Andreas, 61381 Friedrichsdorf/Ts (DE)
(72) Erfinder: Peiker, Andreas, 61381 Friedrichsdorf/Ts (DE)
(74) Vertreter: Patentanwälte Eisele, Otten, Roth & Dobler

(56) Entgegenhaltungen:
- WO-A-98/40244
- DE-U- 29 821 166
- DE-U- 29 902 507
- US-A- 5 121 863
- US-A- 5 463 688
- US-A- 5 907 796
- PATENT ABSTRACTS OF JAPAN vol. 1995, no. 08, 29. September 1995 (1995-09-29) & JP 07 135521 A (FUJITSU TEN LTD), 23. Mai 1995 (1995-05-23)
- PATENT ABSTRACTS OF JAPAN vol. 1999, no. 05, 31. Mai 1999 (1999-05-31) & JP 11 040254 A (SMK CORP), 12. Februar 1999 (1999-02-12)

## Beschreibung

Die Erfindung betrifft eine Vorrichtung zur Halterung und Kontaktierung eines Funktelefons.

Derartige Vorrichtungen kommen in Fahrzeugen zum Einsatz, um ein Funktelefon sicher zu halten und elektrisch mit im Fahrzeug eingebauten Komponenten wie zum Beispiel Freisprecheinrichtung, Antenne und Stromversorgung zu verbinden.

Aus dem Stand der Technik ist eine Vorrichtung bekannt, bei der die Halterung einen Schlitten aufweist, der unter Federvorspannung in Richtung der Kontaktierungseinheit steht. Zum Einlegen wird das Funktelefon mit dem der Schnittstelle des Funktelefons abgewandten Bereich schräg gegen den Schlitten angesetzt. Anschließend erfolgt ein Zurückschieben des Schlittens gegen die Federkraft des Schlittens und ein Einschwenken des Funktelefons in den Aufnahmebereich der Halterung. Sobald das Funktelefon losgelassen wird, wird es vom Schlitten in Richtung der Kontaktierungseinheit geschoben und es erfolgt die Kupplung zwischen Funktelefonschnittstelle und Kontaktierungseinheit.

Bei einer weiteren aus dem Stand der Technik bekannten Vorrichtung wird ein Schlitten durch eine Feder zurückgehalten, so daß das Funktelefon zunächst in die Schale der Halterung eingelegt werden kann. Eine Kontaktierung von Schnittstelle und Kontaktierungseinheit erfolgt durch ein Aufschieben des Funktelefons auf die Kontaktierungseinheit mit Hilfe des Schlittens, der in der Betriebsstellung rastet.

In Bezug auf eine schonende Kontaktierung der empfindlichen Schnittstelle des Funktelefons mit der ebenfalls empfindlichen, an der Halterung angebrachten Kontaktierungseinheit besteht bei den bekannten Halterungen Verbesserungsbedarf. Da bei den bekannten Halterungen nicht gewährleistet ist, daß eine Kontaktierung erst dann erfolgt, wenn das Funktelefon so zur Halterung bzw. zur Kontaktierungseinheit ausgerichtet ist, daß eine Kontaktierung ohne Verkantung und somit Beschädigung erfolgt. Eine Zentrierung des Funktelefons auf die Kontaktierungseinheit der Halterung ist bei modernen Funktelefonen mit Hilfe eines übergreifenden Schlittens nicht möglich, da die gesamte Oberseite des Funktelefons mit Tasten und Anzeigeeinrichtungen bedeckt ist, so daß ein übergreifender Schlitten diese überdecken würde.

Aus dem Dokument US-A-5,121,863 ist eine Vorrichtung zur Halterung und Kontaktierung eines Funktelefons bekannt geworden. Zur Anpassung der Halterung an verschieden große Funktelefone sieht die bekannte Einrichtung vor, daß seitlich bewegbare Backen das Funktelefon seitlich halten. Rückhaltemittel können die Backen in einer Offenstellung halten, wobei ein Betätigungsknopf ein Zusammenziehen der Backen bewirkt.

Aus dem Dokument Patent Abstracts of Japan vol 1995, no. 08, 29. September 1995 (1995-09-29) & JP 07 135521 A (FUJITSU TEN LTD), 23. Mai 1995 (1995-05-23) ist weiterhin eine Halterung für ein Funktelefon bekannt geworden. Das Funktelefon wird in einer Kippbewegung in die Halterung eingelegt, wobei eine Kontaktierungseinheit längsverschiebbar gegen den Druck einer Feder bewegbar ist. Diese Einrichtung hat den Nachteil, daß die empfindlichen Kontakte bei der Kippbewegung des Funktelefons in die Halterung hinein beschädigt werden können. Ein Rückhaltesystem zum Halten der längsverschiebbaren Kontaktierungseinheit in einer Offenstellung ist nicht vorgesehen.

Der Erfindung liegt die Aufgabe zugrunde, eine Vorrichtung zur Halterung und Kontaktierung eines Funktelefons zu entwickeln, die eine Kontaktierung der Schnittstelle des Funktelefons mit der in der Halterung angeordneten Kontaktierungseinheit nur dann ermöglicht, wenn diese optimal fluchtend aufeinander ausgerichtet sind.

Diese Aufgabe wird durch die kennzeichnenden Merkmale des Patentanspruchs 1 gelöst.

Die erfindungsgemäße Vorrichtung zur Halterung und Kontaktierung eines Funktelefons sieht vor, eine Kontaktierungseinheit oder ein Haltemittel durch mindestens ein Rückhaltemittel in einer Offenstellung zu halten. Hierbei gibt ein Schaltmittel, das durch das Rückenteil des Funktelefons beim Kontakt mit der Schale der Halterung betätigt wird, die Kontaktierungseinheit oder das Haltemittel frei. Hierdurch ist sichergestellt, daß eine Kontaktierung erst dann erfolgt wenn das Funktelefon vollständig in der Schalte der Halterung liegt. In dieser Position sind die Schnittstelle und die Kontaktierungseinheit fluchtend aufeinander ausgerichtet.

Nach einer besonders bevorzugten Ausführungsform des Erfindungsgegenstandes ist das linear geführte Haltemittel mit Federkraft aus der Offenstellung gegen die Kontaktierungseinheit oder den Köcher in eine Betriebsstellung verfahren. Hierbei wird das als Handy ausgestaltete Funktelefon gegen die Kontaktierungseinheit verfahren. Dies ist vorteilhaft, da die Kontaktierungseinheit bei dieser Ausführungsform als feste, unbewegliche Einheit in der Halterung angeordnet ist und somit die zu ihr führenden Anschlußdrähte keiner ständigen Bewegungsbelastung unterliegen.

Eine zweckmäßige Ausführung des Erfindungsgegestandes sieht somit vor, daß das Haltemittel in mindestens eine Verfahrrichtung durch eine Feder beaufschlagt ist. Dies erlaubt eine schonende Kontaktierung.

Gemäß der Erfindung ist die Kontaktierungseinheit an der Halterung linearverschieblich gelagert und kann aus der Offenstellung gegen das Haltemittel bzw. das Funktelefon in eine Betriebsstellung verfahren werden. Durch dieses lineare Aufeinanderzubewegen der Kontakte ist sichergestellt, daß diese ohne Seitenbelastung ineinander geführt werden.

Es ist vorteilhaft, wenn die Kontaktierungseinheit in mindestens eine Verfahrrichtung durch eine Feder beaufschlagt ist. Hierdurch erfolgt eine schonende, automatische Kontaktierung.

Weiterhin ist es vorteilhaft, wenn das Rückhaltemittel als gefederter Stößel ausgebildet ist, der aus der Schale der Halterung hervorsteht und im Verfahrbereich der Kontaktierungseinheit oder des Haltemittels angeordnet ist. Auf diese Weise kann die Kontaktierungseinheit oder das Haltemittel mit geringem baulichen Aufwand in einer Offenstellungsposition gehalten werden, in der das Funktelefon einlegbar ist.

Es ist besonders vorteilhaft, wenn der Stößel durch das Rückenteil des Funktelefons niederdrückbar ist. Somit kann der Stößel vom Funktelefon bedient werden, ohne daß dieses speziell auf ihn angepasst ist.

Gemäß einer besonderen Ausführungsform ist der Stößel durch einen Hebel zurückziebar, den das als Mobiltelefon ausgestaltete Funktelefon im eingelegten Zustand mit dem Rückenteil betätigt. Durch diese Ausführung ist es möglich, den maßgebenden Kontaktpunkt zwischen dem Funktelefon und der Schale der Halterung an jeder beliebigen oder an mehreren Stellen der Schale anzuordnen und so auf individuelle Gegebenheiten, wie zum Beispiel besondere Funktelefonformen Rücksicht zu nehmen.

Schließlich sieht eine weiter Ausbildung des Gegenstandes der Erfindung vor, in der Halterung einen Näherungsschalter anzuordnen, der vom eingelegten Funktelefon anregbar ist, wobei der Näherungsschalter einen Elektomagneten ansteuert, der den Stößel zurückzieht. Durch diese Maßnahme ist es möglich eine gefällige Oberflächengestaltung zu erzielen, welche die Funktion unsichtbar läßt.

Hierbei zeigt:
- Fig. 1: eine Seitenansicht einer Halterung, bei welcher der Schlitten in einer ein Funktelefon freigebenden Stellung steht,
- Fig. 2: eine Seitenansicht einer zweiten Halterung, bei welcher der Schlitten in einer ein zweites Funktelefon haltenden Stellung steht,
- Fig. 3: eine Draufsicht auf eine dritte Halterung mit eingelegtem Funktelefon,
- Fig. 4: ein viertes Funktelefon und eine vierte Halterung, bei welcher der Schlitten in einer das Funktelefon freigebenden Stellung steht.

### Beschreibung der Ausführungsbeispiele:

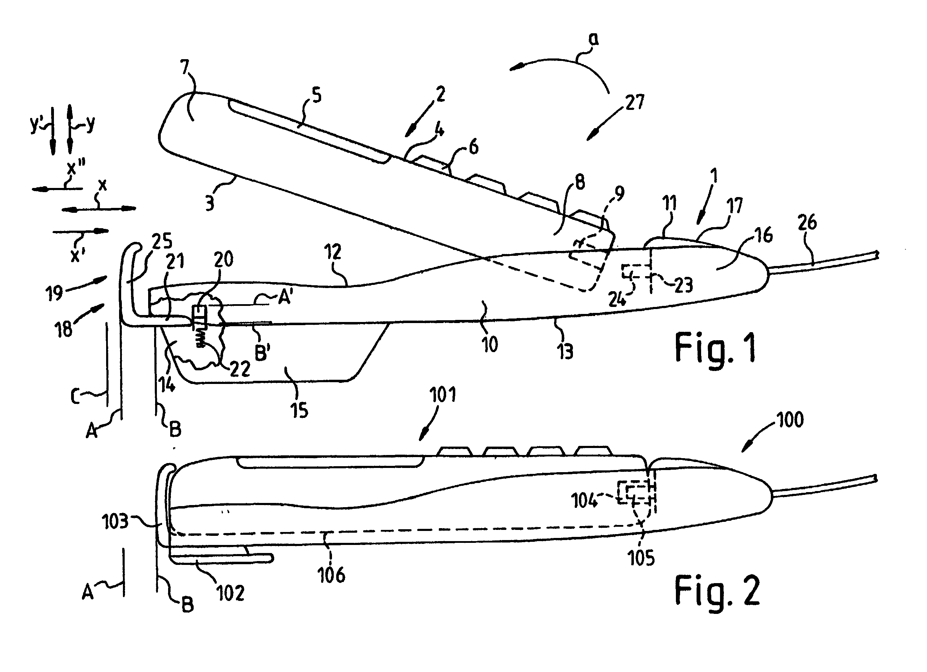

In Figur 1 zeigt eine Halterung 1 und ein Funktelefon 2. Das Funktelefon 2 weist eine Rückseite 3, eine Oberseite 4 mit Display 5 und Tastatur 6, einen Kopfbereich 7 und einen Fußbereich 8 auf. Im Fußbereich 8 des Funktelefons 2 ist eine Schnittstelle 9 angeordnet. Die Schnittstelle 9 weist nicht dargestellte Kontaktstifte und/oder Kontaktflächen auf. Die Halterung besteht aus einem Grundkörper 10, der auf einer Oberseite 11 eine Ausnehmung 12 aufweist. Die Halterung 1 weist weiterhin auf einer Unterseite 13 in einem Endbereich 14 einen Hörbereich 15 und in einem Endbereich 16 einen Sprechbereich 17 auf. Im Endbereich 14 ist ein Schlitten 18 angeordnet, der als Spange 19 ausgebildet ist. Die Spange 19 ist in Doppelpfeilrichtung x verschiebbar in der Halterung 1 gelagert. Durch eine nicht dargestellte Federeinrichtung wird die Spange 19 in Pfeilrichtung x' aus eine Offenstellung A in eine Betriebsstellung B beaufschlagt. Eine Bewegung der Spange 19 in Pfeilrichtung x' wird durch einen in der Halterung angeordneten Stößel 20 verhindert, an dem in der Offenstellung A ein Schenkel 21 der Spange 19 anliegt. Der Stößel 20 ist in Doppelpfeilrichtung y bewegbar und kann aus einer Sperrstellung A' gegen eine Feder 22 in Pfeilrichtung y' in eine Freigabestellung B' niedergedrückt werden. Im Endbereich 16 endet die Ausnehmung 12 in einer Wand 23, die eine Kontaktierungseinheit 24 (gestrichelt dargestellt) trägt. Die Kontaktierungseinheit 24 besteht aus nicht dargestellten hülsen- oder gabelförmigen Mutterkontakten und/oder gefederten Kontaktstiften. Ein Einlegen des Funktelefons 2 in die Halterung 1 erfolgt nun in folgenden Schritten. Das Funktelefon 2 wird mit dem Fußbereich 8 schräg im Endbereich 16 der Halterung 1 in die Ausnehmung 12 gesetzt, wobei die Rückseite 3 des Funktelefons 2 zur Aufnahme 12 hin orientiert ist (diese Stellung ist in Figur 1 dargestellt). Danach erfolgt eine Drehung des Funktelefons 2 in Pfeilrichtung a, wobei der Kopfbereich 7 des Funktelefons 2 auf den Endbereich 14 der Halterung 1 zugedreht wird. Beim Eindrehen des Funktelefons 2 in die Aufnahme 12 berührt dieses mit der Rückseite 3 den Stößel 20 und drückt diesen gegen die Feder 22 in Pfeilrichtung Y' in die Freigabstellung B'. In der Freigabstellung B' gibt der Stößel 20 die Spange 19 frei und diese bewegt sich aufgrund der Federvorspannung in Pfeilrichtung x' in die Betriebsstellung B. Hierbei schiebt die Spange 19 das Funktelefon 2 mit einem zweiten Schenkel 25 in Pfeilrichtung x'. Dies bewirkt ein Aufgleiten der Schnittstelle 9 auf die Kontaktierungseinheit 24. Die Bewegung der Spange 19 erfolgt in etwa parallel zu der Ausrichtung der nicht dargestellten Kontaktstifte der Schnittstelle 9 bzw. der Kontaktierungseinheit 24. Sobald das Funktelefon 2 eingelegt ist kann nun über eine nicht dargestellte Freisprecheinrichtung telefoniert werden, die über eine Datenleitung 26 mit der Halterung 1 verbunden ist. Weiterhin ist es auch möglich die Halterung 1 als Handapparat 27 zu verwenden und über den Hörbereich 15 und den Sprechbereich 17 mit Dritten zu kommunizieren. Die Entnahme des Funktelefons 2 aus der Halterung 1 erfolgt durch ein Zurückziehen des Funktelefons 2 in Pfeilrichtung x''. Hierbei wird die Spange 19 vom Kopfbereich 7 des Funktelefons 2 in Pfeilrichtung x'' bis in die Offenstellung A mitgenommen. In dieser Position springt beim Anheben des Funktelefons 2 der Stößel 20 aus der Freigabestellung B' in die Sperrstellung A', da er weder von der Rückseite 3 des Funktelefons 2 noch vom Schenkel 21 der Spange 19 zurückgehalten wird. Es ist nicht dargestellt, daß der Stößel 20 zum Schenkel 21 hin abgeschrägt ist, so daß die Spange 19 auch dann freigegeben ist, wenn der Stößel 20 von der Rückseite des Funktelefons 2 nicht vollständig aus dem Bewegungsbereich der Spange 19 gedrückt ist. Zur Erleichterung der Entnahme des Funktelefons 2 ist es vorgesehen, daß die Spange 19 bei der Entnahme des Funkteklefons 2 von dessen Kopfbereich 7 zeitweise in eine hinter der Offenstellung A liegende Freigabestellung C schiebbar ist.

Figur 2 zeigt eine weitere Halterung 100, in die ein Funktelefon 101 eingelegt ist. Dieser Halterung 100 besitzt statt eines Hörbereichs und eines Sprechbereichs einen Schuh 102, mit dem die Halterung 100 in eine nicht dargestellte Aufnahme eingeschoben werden kann. In Figur 2 befindet sich eine Spange 103 in einer Betriebsstellung B, in der das Funktelefon 101 mit einer Schnittstelle 104 auf eine Kontaktierungseinheit 105 der Halterung 100 aufgeschoben ist. Analog zu der in Figur 1 dargestellten Halterung 1 besitzt auch die Halterung 100 einen Sperrmechanismus (nicht dargestellt), der die Spange 103 in einer Offenstellung A hält und von einer Rückseite 106 des Funktelefons 101 beim Einlegen ausgelöst wird. Gemäß einer nicht dargestellten Ausführungsvariante ist es vorgesehen, den Schuh 102 als Polschuh auszuführen, wobei dieser von einer Aufnahme mit Kontakten aufgenommen wird. Hierbei werden über den Polschuh die Kontakte geführt, die zum Anschluß von Freisprecheinrichtung, Antenne, Stromversorgung und Datenversorgung dienen.

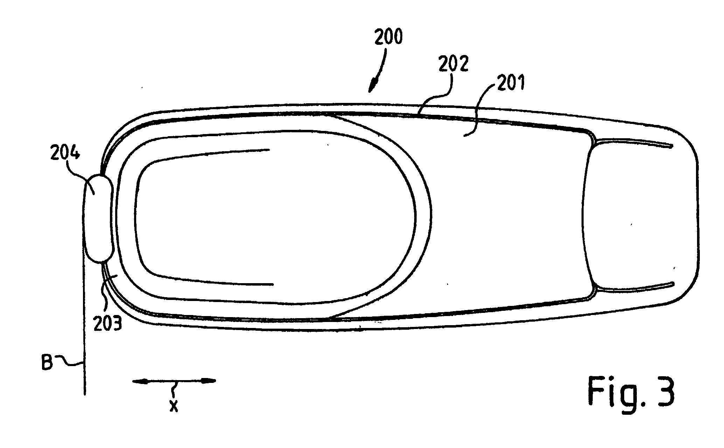

In Figur 3 ist eine Halterung 200 in Draufsicht dargestellt. In der Halterung 200 ist eine Funktelefon 201 aufgenommen. Das Funktelefon 201 liegt in einer Ausnehmung 202 der Halterung 200. Das Funktelefon 201 weist eine Oberseite 203 auf, die von einer an der Halterung 200 in Richtung des Bewegungspfeils x geführten Spange 204 übergriffen wird. Die Spange 204 steht in einer Betriebsstellung B, in der das Funktelefon 201 über eine nicht dargestellte Schnittstelle mit einer nicht dargestellten Kontaktierungseinheit der Halterung 200 Kontakt hat.

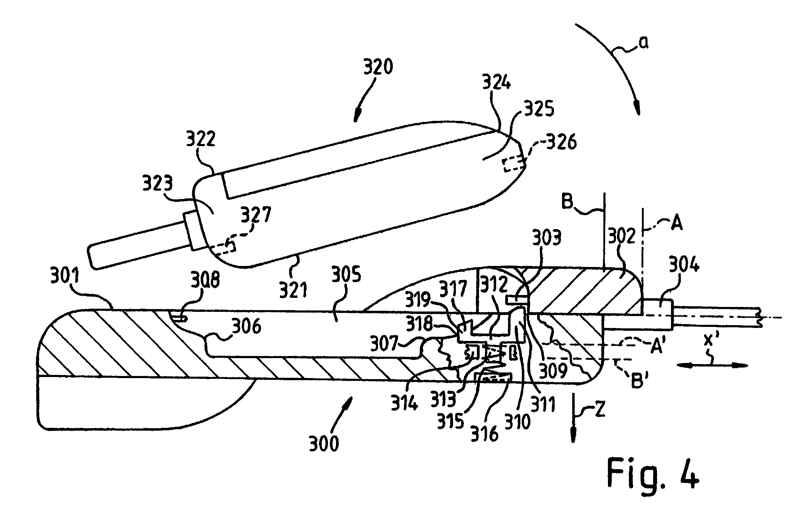

In Fig. 4 ist eine Halterung 300 in einer geschnittenen Seitenansicht dargestellt. An einer Oberseite 301 der Halterung 300 ist ein Schlitten 302 mit einer Kontaktierungseinheit 303 linear beweglich gelagert. Die Kontaktierungseinheit 303 ist elektrisch mit einer Kabelzuführung 304 verbunden. Die Halterung 300 weist an ihrer Oberseite 301 eine Mulde Ausnehmung 305 auf. Diese Mulde 305 besitzt Schultern 306, 307. Weiterhin besitzt die Mulde 305 eine dem Schlitten 302 gegenüberliegende Nase (Gegenlager) 308. Nach einer nicht dargestellten Ausführungsvariante ist die Nase 308 als Übergriff ausgeführt. Auf der Oberseite 301 ist in der Halterung 300 eine Bohrung 309 angeordnet durch die ein Stößel 310 greift, der als Spitze 311 einer Gabel 312 ausgebildet ist. Die Gabel 312 besitzt einen Stiel 313, der in einer Führung 314 gegen eine Feder 315 geführt ist. Die Feder 315 ist in einer Aufnahme 316 gegengelagert. Weiterhin tritt an der Schulter 307 ein zweiter Stößel 317 durch eine Bohrung 318, der als zweite Spitze 319 der Gabel 312 ausgeführt ist. Ein Niederdrücken des Stößels 317 bewirkt ein Zurückziehen des Stößels 310 und somit eine Freigab es Schlittens 302 in eine Verfahrrichtung x'. Weiterhin ist ein Funktelefon 320 in Seitenansicht dargestellt. Das Funktelefon 320 besitzt eine Rückseite 321. Im Bereich einer Hörmuschel 322 bildet das Funktelefon 320 einen Kopfbereich 323 aus. Im Bereich einer Sprechmuschel 324 bildet das Funktelefon 320 einen Fußbereich 325 aus. Im Fußbereich 325 ist eine Schnittstelle 326 ausgebildet. Weiterhin weist das Funktelefon 320 im Kopfbereich 323 einen Rücksprung 327 auf. Vor dem Einlegen des Funktelefons 320 in die Mulde (Schale) 305 der Halterung 300 steht die Gabel 312 in einer Sperrstellung A'. Beim Einlegen des Funktelefons 320 in die Mulde 305 der Halterung 300 ergibt sich nun folgender Ablauf. Das Funktelefon 320 wird mit dem Kopfbereich 323 in leichter Schrägstellung auf die Nase 308 zugeführt. Hierbei wird die Nase 308 vom Rücksprung 327 mit Spiel aufgenommen. Anschließend erfolgt eine Drehung des Funktelefons 320 in Richtung eines Pfeiles a bis das Funktelefon 320 mit seiner Rückseite 321 in der Mulde 305 auf den Schultern 306, 307 aufliegt. Hierbei wird der Stößel 317 von der Rückseite 321 des Funktelefons 320 in die Halterung 300 eingedrückt. Dies bewirkt ein Zurückschieben der Gabel 312 in eine Pfeilrichtung z gegen die Feder 315. Durch diese Ausweichbewegung der Gabel 312 wird der Stößel 310 in die Halterung 300 zurückgezogen und gibt den Schlitten 302 für eine Bewegung in Pfeilrichtung x' frei. Der Schlitten 302 wird durch eine nicht dargestellte Federvorrichtung in Richtung x' gedrückt. Im Laufe dieser Bewegung in Pfeilrichtung x' erfolgt die Kontaktierung zwischen der am Schlitten 302 angebrachten Kontaktierungseinheit 303 und der am Funktelefon 320 angeordneten Schnittstelle 326. In der Betriebsstellung B ist die Kontaktierung zwischen der Schnittstelle 326 des Funktelefons 320 und der Kontaktierungseinheit 303 des Schlittens 302 vollständig erfolgt. Solange das Funktelefon 320 in der Mulde 305 der Halterung 300 liegt bzw. der Schlitten 302 in der nicht dargestellten Betriebsstellung B steht bleibt die Gabel 312 in einer niedergedrückten Freigabestellung B'. Die Gabel 312 kehrt erst in die Sperrstellung A' zurück, wenn der Schlitten 302 zurückgezogen und das Funktelefon 320 aus der Schale 305 der Halterung 300 entnommen wird.

Die Erfindung ist nicht auf dargestellte oder beschriebene Ausführungsbeispiele beschränkt. Sie umfaßt auch vielmehr Weiterbildungen der Erfindung im Rahmen der Schutzrechtsansprüche. Insbesondere sieht die Erfindung auch eine Rastvorrichtung für die Spange oder den Schlitten in der Betriebsstellung B vor. Diese ist nach einer nicht dargestellten Ausführungsvariante so ausgebildet, daß die Spange oder der Schlitten Mulden aufweist, in die eine an der Halterung gefedert gelagerte Kugel einschnappt. Durch eine Erhöhung des Schiebedrucks kann diese Rastung gelöst werden.

## Patentansprüche

1. Vorrichtung zur Halterung und Kontaktierung eines Funktelefons mittels einer Halterung (1, 100, 200, 300), wobei ein bewegliches Haltemittel (18, 19, 103, 204) oder eine bewegliche Kontaktierungseinheit (303) vorgesehen ist, welches/welche durch mindestens ein Rückhaltemittel (20, 310) in einer Offenstellung gehalten ist, wobei das Rückhaltemittel (20, 310) das bewegliche Haltemittel (18, 19, 103, 204) oder die bewegliche Kontaktierungseinheit (303) dann freigibt, wenn das Funktelefon (2, 101, 201, 320) ein in einer Ausnehmung (12, 305) der Halterung (1, 100, 200, 300) angeordnetes Schaltmittel (20, 317) mit seinem Rückenteil (3, 106, 321) betätigt, wobei entweder das bewegliche Haltemittel (18, 19, 103, 204) an der Halterung (1, 100, 200) aus seiner Offenstellung in einer Linearbewegung gegen eine feststehende Kontaktierungseinheit (24, 105) oder die bewegliche Kontaktierungseinheit (303) an der Halterung (300) aus ihrer Offenstellung in einer Linearbewegung gegen ein Gegenlager (308) bewegbar ist.

2. Vorrichtung nach Anspruch 1, **dadurch gekennzeichnet, daß** das bewegliche Haltemittel (18, 19, 103, 204) in mindestens eine Bewegungsrichtung durch eine Feder beaufschlagt ist.

3. Vorrichtung nach Anspruch 1, **dadurch gekennzeichnet, daß** die bewegliche Kontaktierungseinheit (303) in mindestens eine Bewegungsrichtung durch eine Feder beaufschlagt ist.

4. Vorrichtung nach einem der vorgehenden Ansprüche, **dadurch gekennzeichnet, daß** das Rückhaltemittel als gefederter Stößel (20, 310) ausgebildet ist, der im Bewegungsbereich des Haltemittels (18, 19, 103, 204) oder der beweglichen Kontaktierungseinheit (303) angeordnet ist.

5. Vorrichtung nach Anspruch 4, **dadurch gekennzeichnet, daß** der Stößel (20, 310) durch das Rückenteil (3, 106, 321) des Funktelefons (2, 101, 201, 320) niederdrückbar ist.

6. Vorrichtung nach Anspruch 4 oder 5, **dadurch gekennzeichnet, daß** der Stößel (20, 310) durch eine Gabel (312) betätigbar ist.

7. Vorrichtung nach Anspruch 4, **dadurch gekennzeichnet, daß** mindestens ein in der Halterung (1, 100, 200, 300) angeordneter Näherungsschalter vom eingelegten Funktelefon (2, 101, 201, 320) anregbar ist, wobei der Näherungsschalter einen Elektomagneten ansteuert, der den Stößel (20, 310) zurückzieht.

## Claims

1. A device for holding and contacting a radio telephone by means of a holder (1, 100, 200, 300),
wherein a moveable holding means (18, 19, 103, 204) or a moveable contacting unit (303) is provided, which is held by at least one retaining means (20, 310) in an open position,
wherein the retaining means (20, 310) releases the moveable holding means (18, 19, 103, 204) or the moveable contacting unit (303) when the radio telephone (2, 101, 201, 320) actuates a switching means (20, 317) disposed in a recess (12, 305) of the holder (1, 100, 200, 300) with its rear part (3, 106, 321),
wherein either the moveable holding means (18, 19, 103, 204) at the holder (1, 100, 200) can be moved out of its open position in a linear movement towards a fixed contacting unit (24, 105) or the moveable contacting unit (303) at the holder (300) can be moved out of its open position in a linear movement towards a thrust bearing (308).

2. A device according to Claim 1,
**characterised in that** the moveable holding means (18, 19, 103, 204) is stressed in at least one direction of movement by a spring.

3. A device according to Claim 1,
**characterised in that** the movable contacting unit (303) is stressed in at least one direction of movement by a spring.

4. A device according to one of the preceding Claims,
**characterised in that** the retaining means are constructed as a spring-loaded lifter (20, 310), which is disposed in the range of movement of the holding means (18, 19, 103, 204) or of the moveable contacting unit (303).

5. A device according to Claim 4,
**characterised in that** the lifter (20, 310) can be pressed down by the rear part (3, 106, 321) of the radio telephone (2, 101, 201, 320).

6. A device according to Claim 4 or 5,
**characterised in that** the lifter (20, 310) can be actuated by a fork (312).

7. A device according to Claim 4,
**characterised in that** at least one proximity switch disposed in the holder (1, 100, 200, 300) can be stimulated by the inserted radio telephone (2, 101, 201, 320), the proximity switch triggering an electromagnet which retracts the lifter (20, 310).

## Revendications

1. Dispositif de support et d'établissement de contact d'un radiotéléphone au moyen d'un support (1, 100, 200, 300), un moyen d'arrêt mobile (18, 19, 103, 204) ou une unité de contact mobile (303) étant prévu(e), lequel ou laquelle est maintenu(e) dans une position d'ouverture par au moins un moyen de retenue (20, 310), le moyen de retenue (20, 310) libérant le moyen d'arrêt mobile (18, 19, 103, 204) ou l'unité de contact mobile (303) quand le radiotéléphone (2, 101, 201, 320) actionne avec sa partie arrière (3, 106, 321) un moyen de commutation (20, 317) agencé dans un évidement (12, 305) du support (1, 100, 200, 300), le moyen d'arrêt mobile (18, 19, 103, 204) pouvant être déplacé sur le support (1, 100, 200) à partir de sa position d'ouverture dans un mouvement linéaire contre une unité de contact fixe (24, 105) ou bien l'unité de contact mobile (303) pouvant être déplacée sur le support (300) à partir de sa position d'ouverture dans un mouvement linéaire contre une butée (308).

2. Dispositif selon la revendication 1,
**caractérisé en ce que** le moyen d'arrêt mobile (18, 19, 103, 204) est sollicité dans au moins une direction de déplacement par un ressort.

3. Dispositif selon la revendication 1,
**caractérisé en ce que** l'unité de contact mobile (303) est sollicitée dans au moins une direction de déplacement par un ressort.

4. Dispositif selon l'une des revendications précédentes,
**caractérisé en ce que** le moyen de retenue est réalisé sous la forme d'un poussoir à ressort (20, 310) qui est agencé dans la zone de déplacement du moyen d'arrêt (18, 19, 103, 204) ou de l'unité de contact mobile (303).

5. Dispositif selon la revendication 4,
**caractérisé en ce que** le poussoir (20, 310) peut être enfoncé par la partie arrière (3, 106, 321) du radiotéléphone (2, 101, 201, 320).

6. Dispositif selon la revendication 4 ou 5,
**caractérisé en ce que** le poussoir (20, 310) peut être actionné par une fourchette (312).

7. Dispositif selon la revendication 4,
**caractérisé en ce qu'**au moins un détecteur de proximité agencé dans le support (1, 100, 200, 300) peut être activé par le radiotéléphone (2, 101, 201, 320) posé, le détecteur de proximité commandant un électro-aimant qui retire le poussoir (20, 310).
